# EUROPEAN PATENT APPLICATION

(11) **EP 2 535 234 A1**
(43) Date of publication of application: **19.12.2012**
(21) Application number: 11742027.3
(22) Date of filing: 09.02.2011
(51) Int. Cl.: B60T 13/74, G01B 7/00

(54) **ELECTRIC SERVO DEVICE AND BRAKE DEVICE EMPLOYING SAME**

(30) Priority: 12.02.2010 JP 2010028628
(71) Applicant: Bosch Corporation, Tokyo 150-8360 (JP)
(72) Inventor: MORI, Yasushi, Hiki-gun Saitama 355-0813 (JP)
(74) Representative: Dreiss
(86) International application number: PCT/JP2011/000717
(87) International publication number: WO 2011/099277

(57) **Abstract**

[Problem] To provide an electric booster that can mechanically exhibit a jump-in characteristic and a hysteresis characteristic without relying on control software.

[Means for Resolution] An electric booster 3 includes an electric motor 9; a power piston 14 that receives impelling force generated by rotation of the electric motor 9; a power piston support member 19 that supports the power piston 14; an input shaft 22; an input receiving member 21 that receives input from the input shaft 22 and that is provided so as to be relatively moveable with respect to the power piston support member 19; an output shaft 23; a reaction disc 24, formed from a viscoelastic material, that receives reaction force from the output shaft 23; and a spacing member 25 that is connected to the input receiving member 21 and that is disposed with a predetermined gap α between it and the reaction disc 24.

## Description

### Technical Field

The present invention relates to the technical field of electric boosters that generate an output by boosting an input at a predetermined servo ratio using electric power, and to the technical field of brake devices that use the electric boosters.

### Background Art

In known brake devices for automobiles such as passenger vehicles, a brake booster is used that generates an output by boosting an input at a predetermined servo ratio using electric power. This brake booster generates an output by boosting an input that is based on a pedal depression force. Then, the output of the brake booster actuates a master cylinder, thus allowing a large brake force to be obtained using a small pedal depression force.

As an example of this known brake booster, an electric booster is proposed that uses electric power (for example, refer to Patent Document 1). In the electric booster disclosed in Patent Document 1, when a brake pedal is depressed, an electric motor is driven and along with this a rotating member is rotated by driving force of the electric motor via a gear power transmission mechanism. At this time, the rotating member rotates in accordance with a pedal stroke. The rotation of the rotating member causes an input piston to advance as a result of a screw shaft advancing due to a ball screw mechanism. The advancing input piston actuates a power piston, and thus the electric booster generates an output by boosting the input, which is based on the pedal depression force, at a servo ratio. The output of the electric booster actuates a piston of a master cylinder, which is integrated with the power piston, and thus the master cylinder generates braking liquid pressure. Then, the braking liquid pressure operates a brake cylinder to cause braking.

However, generally, even if the brake booster has generated an output, the braking liquid pressure is not generated in a brake line, such as a brake hydraulic circuit, immediately. Further, even if the braking liquid pressure is generated, the brake cylinder does not operate immediately. More specifically, a load loss occurs in the brake line. Given this, known brake boosters are provided with a jump-in characteristic (also known as a jumping characteristic). This jump-in characteristic is a characteristic exhibited by a brake booster that has the input-output characteristic that there is no input increase until a predetermined output is reached, and then when the determined output is reached, the input increases in accordance with the output increase. At that time, the characteristic is that an output increase is generated that is boosted at a servo ratio from an input increase.

In the electric booster disclosed in Patent Document 1, the jump-in characteristic is exhibited during initial actuation. In this case, the electric booster exhibits the jump-in characteristic mechanically without relying on control software. This known electric booster includes a first dividing member that connects an input piston with an input pedal; a second dividing member which is connected to a piston of a master cylinder and which moves relatively with respect to the first dividing member; and spring means disposed between the first and the second dividing members. When liquid pressure generated by the master cylinder reaches a predetermined liquid pressure, a reaction force resulting from this liquid pressure is transmitted to the second dividing member via the piston of the master cylinder. As a result, the spring means deflects and the reaction force is transmitted to the brake pedal via the first dividing member.

Patent Document 1: JP-A-2008-81033

### Disclosure of the Invention

### Problems that the Invention is to Solve

However, the electric booster disclosed in Patent Document 1 has a mechanical jump-in characteristic but does not have a hysteresis characteristic. Thus, it faces the problem that a favorable braking feeling is hard to obtain.

The invention has been devised in light of the above described circumstances, and an object thereof is to provide an electric booster that can mechanically exhibit a jump-in characteristic and a hysteresis characteristic without relying on control software, and a brake device that uses this electric booster.

### Means for Solving the Problems

In order to solve the above described problem, an electric booster according to the invention at least includes: an input shaft to which an input is applied: an input receiving member that receives input from the input shaft; a power piston; a power piston support member that supports the power piston; relative displacement detection means for detecting relative displacement of the input receiving member and the power piston support member; an electric motor that actuates the power piston based on the relative displacement detected by the relative displacement detection means; an output shaft that generates output as a result of the actuation of the power piston; and a reaction force member, formed from a viscoelastic material, that receives reaction force from the output shaft. The electric booster may be characterized in that the input receiving member is disposed such that it is separated away from the reaction force member by a predetermined gap when non-actuated, and can be placed into an abutting state with the reaction force member when actuated when a predetermined input is applied.

Furthermore, the electric booster according to the invention may be characterized in that the electric motor includes a stator to which current is supplied based on the relative displacement detected by the relative displacement detection means, and a rotor that is rotated by the stator and that applies impelling force to the power piston based on the relative displacement.
Furthermore, the electric booster according to the invention may be characterized in that the relative displacement detection means includes a magnetic sensor and a magnet.

Furthermore, the electric booster according to the invention may be characterized in that the magnetic sensor is disposed in the power piston support member and the magnet is disposed in the input receiving member.
Furthermore, the electric booster according to the invention may be characterized in that the reaction force member is a reaction disc that is formed from rubber.

In addition, a brake device according to the invention at least includes: a brake operating member that performs a brake operation; an electric booster that generates an output by boosting an input from the brake operating member at a predetermined servo ratio; a master cylinder, actuated by the output of the electric booster, that generates brake pressure; and a brake cylinder that is actuated by the brake pressure from the master cylinder. The brake device may be characterized in that the electric booster is the electric booster disclosed in any one of the electric boosters according to the invention disclosed above.

### Effect of the Invention

As a result of configuring the electric booster of the invention in the manner described above, rotation of the electric motor causes the impelling force to be applied to the power piston, whereby the power piston is actuated. The output, which is boosted at the predetermined servo ratio from the input resulting from the actuation of the power piston, is generated through the output shaft. In addition, the reaction force that accompanies the output is transmitted from the output shaft to the reaction force member that is formed from the viscoelastic material. Moreover, the input receiving member that receives the input is separated by the predetermined gap from the reaction force member at non-actuated times, and abuts against the reaction force member at actuated times due to application of the predetermined input. As a result, it is possible to realize an electric booster that can mechanically exhibit both a jump-in characteristic resulting from the predetermined gap between the input receiving member and the reaction force member and the hysteresis characteristic resulting from the viscoelastic properties of the reaction force member, without relying on control software.

In addition, rotation of the rotor of the electric motor causes the impelling force that is directly applied to the power piston. Accordingly, a gear power transmission mechanism like that in the electric booster disclosed in Patent Document 1 does not need to be used, and thus the number of structural components can be reduced. This makes it possible to make the electric booster smaller to this extent. Moreover, as a result of not using the gear power transmission mechanism, when there is reverse rotation of the rotor when the power piston retracts in a full load region of the electric booster, torque resistance resulting from the gear power transmission mechanism is reduced, and the reverse rotation of the rotor can take place more smoothly.

In addition, the relative displacement of the input receiving member and the power piston support member that supports the power piston is detected by the relative displacement detection means, and the electric motor actuates the power piston based on the previously described relative displacement detected by the relative displacement detection means. As a result, the relative displacement detection means can be provided integrally inside the electric booster. Thus, it is possible to reduce the number of structural components, and it is also unnecessary to specially provide space for installing the relative displacement detection means outside of the electric booster. Accordingly, it is possible to make the installation space for the electric booster even smaller, thus meaning that there is greater design freedom in terms of installing the electric booster. In addition, the actuation of the electric motor is controlled based on the relative displacement of the power piston support member and the input receiving member that is detected by the relative displacement detection means. Thus, the actuation of electric booster can be controlled with higher accuracy.

In this case, as a result of the relative displacement detection means having the magnet that is disposed in the input receiving member and the magnetic sensor that is disposed in the power piston support member and that generates an output based on the magnetic field of the magnet, the configuration of the relative displacement detection means can be made simpler.
Moreover, as a result of providing the reaction disc formed of rubber as the reaction force member, the configuration of the reaction force member can be made even simpler.

Moreover, the brake device including the electric booster of the invention utilizes the electric booster of the invention and thus the installation space for the brake device can be made even smaller, thus meaning that there is greater design freedom in terms of installing the brake device. Moreover, brake control can be performed with higher accuracy.

### Brief Description of the Drawings

[FIG. 1] FIG. 1 is a schematic view of a brake device provided with one example embodiment of an electric booster according to the invention.
[FIG. 2] FIG. 2 is a longitudinal section view of the example of the electric booster.
[FIG. 3] FIG. 3 is an input-output characteristics chart of the example of the electric booster.

### Best Mode for Carrying Out the Invention

Hereinafter a mode for carrying out the invention will be explained with reference to the drawings.

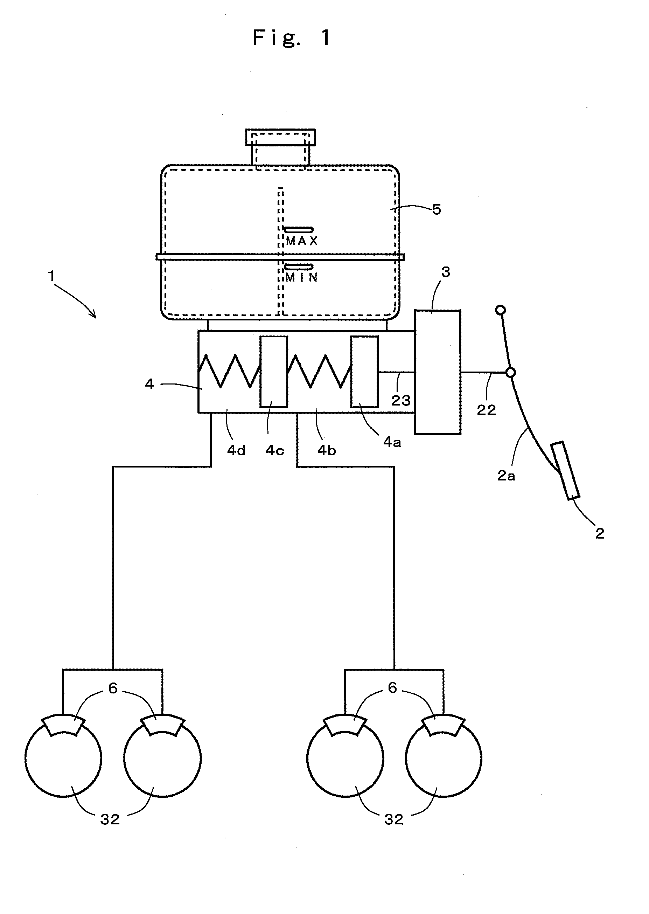

FIG. 1 is a schematic view of a brake device provided with one example embodiment of an electric booster according to the invention.
As shown in FIG. 1, an example brake device 1 is fundamentally the same as a generally known dual line brake device. More specifically, the brake device 1 is provided with a brake pedal 2, an electric booster 3, a tandem master cylinder 4, a reservoir tank 5, and brake cylinders 6.

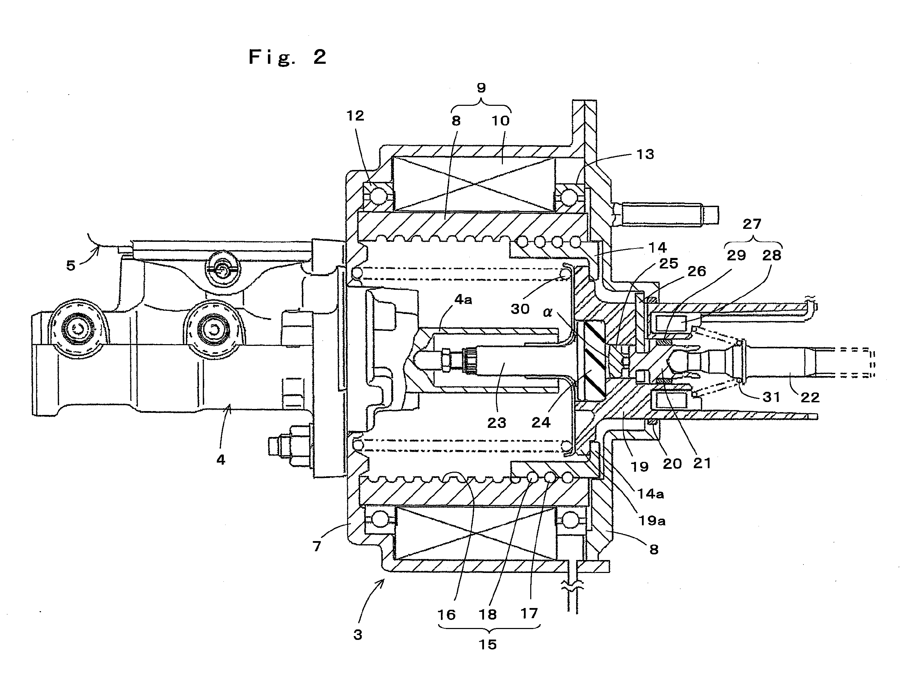

As shown in FIG 2, the example electric booster 3 has a front housing 7 and a rear housing 8 that are connected to each other. An electric motor 9 is disposed within the front housing 7. This electric motor 9 includes: a stator 10 that is an annular, magnetic force generating member formed from a coil that is fixed to and supported by the front housing 7; and a rotor 11 that is a cylindrical, rotating member that is disposed at an inner periphery of the stator 10 such that it can rotate relatively, due to the magnetic force of the stator 10. Outer peripheral surfaces of both axial direction end sections of the rotor 11 are rotatably supported by the front housing 7 via a pair of bearings 12, 13. In addition, the rotor 11 is supported such that it cannot move in the axial direction (the left-right direction of FIG. 2) between the front housing 7 and the rear housing 8.
Although not shown in the figures, a power supply is connected to the stator 10 via a current control device, and the current control device is connected to an electronic control unit of the brake device 1.

A power piston 14 is disposed within the rotor 11 such that it cannot rotate relatively but can advance in the axial direction with respect to the rotor 11. A ball screw mechanism 15 is disposed between an inner peripheral surface of the rotor 11 and an outer peripheral surface of the power piston 14. The ball screw mechanism 15 is a known ball screw mechanism and includes a rotor side screw groove 16 that is formed in the inner peripheral surface of the rotor 11; a power piston side screw groove 17 that is formed in the outer peripheral surface of the power piston 14; and a predetermined number of balls 18 that are rollably disposed between the rotor side screw groove 16 and the power piston side screw groove 17.

The power piston 14 is supported by a cylindrical power piston support member 19. In this structure, the power piston 14 is supported by the power piston support member 19 as a result of a circular flange 14a that protrudes at the inner side of the power piston 14 engaging with a circular flange 19a that protrudes at the outer side of the power piston support member 19 such that positioning (centering) in the radial direction is achieved and axial direction separation is possible.

The power piston support member 19 is disposed such that it passes through the rear housing 8 and is supported in a linearly slidably manner by the rear housing 8 via a bearing 20. An input receiving member 21 is fitted in an inner periphery hole of the power piston support member 19 such that it can slide linearly and relatively with respect to the power piston support member 19. An input shaft 22 is connected to the input receiving member 21 and is capable of swinging relatively with respect thereto, and, as shown in FIG. 1, the input shaft 22 is connected to a pedal lever 2a of the brake pedal 2 such that it is capable of swinging relatively with respect thereto.

An output shaft 23 is fitted in an inner periphery hole of the power piston support member 19 at the opposite side to the input shaft 22 such that it is capable of sliding linearly with respect thereto. The output shaft 23 is caused to advance (movement to the left in FIG. 2) by output of the power piston 14, and thereby actuates a primary piston 4a of the tandem master cylinder 4. A reaction disc 24 that is a reaction force member made from a viscoelastic material like rubber etc. is disposed between a rear end of the output shaft 23 and a front surface of the power piston 14. In addition, a spacing member 25 is disposed in an inner periphery hole of the power piston support member 19 between the input receiving member 21 and the reaction disc 24 so as to be capable of sliding linearly and relatively with respect to the power piston support member 19. This spacing member 25 is connected to the input receiving member 21 and is moveably integrated with the input receiving member 21 and faces the reaction disc 24.

Furthermore, a key member 26 is disposed between the power piston support member 19 and the input receiving member 21. The key member 26 passes through a radial direction hole of the power piston support member 19 and enters an annular groove of the input receiving member 21. In addition, as shown in FIG. 2, when the electric booster 3 is not actuated, the key member 26 abuts against the rear housing 8 so as to prevent its retraction. Moreover, the key member 26, which is prevented from retracting, determines a retraction limit position (non-actuated position) of the power piston support member 19 and the input receiving member 21. In addition, in a non-actuated state of the electric booster 3, a predetermined gap α is set between the reaction disc 24 and the spacing member 25. More specifically, the gap α is adjusted by the spacing member 25.

A relative displacement detection sensor 27 is disposed between the power piston support member 19 and the input receiving member 21. The relative displacement detection sensor 27 includes a magnetic sensor 28 like a Hall element, for example, which is formed integrally with the power piston support member 19, and a magnet 29 provided integrally with the input receiving member 21. The magnetic sensor 28 is connected to the electronic control unit mentioned earlier. Furthermore, the relative displacement detection sensor 27 detects relative displacement of the input receiving member 21 (i.e. , the input shaft 22) with respect to the power piston support member 19. More particularly, relative displacement of the input receiving member 21 with respect to the power piston support member 19 causes the magnet 29 to move relatively to the magnetic sensor 28, thus causing a current that reflects the fluctuation of a magnetic field of the magnet 29, i.e., a current that reflects the relative displacement of the input receiving member 21 with respect to the power piston support member 19, to be output to the electronic control unit. Accordingly, the electronic control unit determines the relative displacement of the input receiving member 21 with respect to the power piston support member 19 based on the magnitude of the current input from the magnetic sensor 28.

The power piston support member 19, the input receiving member 21, the reaction disc 24, the spacing member 25, the key member 26, and the gap α respectively correspond to a valve body, a valve plunger, a reaction disc, a spacing member, a key member and a gap in a known negative pressure booster like that disclosed in Japanese Patent No. 2606909. Given this, the functions and effects of these members can easily be understood by referring to the disclosure of Japanese Patent No. 2606909 and so a detailed explanation will be omitted here. In this example, the electric booster 3 does not use a liquid for power, and thus the power piston support member 19 and the input receiving member 21 do not correspond, respectively, with the valve body and the valve plunger disclosed in Japanese Patent No. 2606909 with respect to the point that they do not have a control valve function for supplying and discharging fluid.

A return spring 30 is provided in a compressed state between the front housing 7 and the power piston support member 19. This return spring 30 normally urges the power piston support member 19 in a non-actuated direction. As a result, the circular flange 19a of the power piston support member 19 is normally engaged in the axial direction with the circular flange 14a of the power piston 14. Then, when the power piston support member 19 retracts in the non-actuated direction, the power piston 14, the reaction disc 24 and the output shaft 23 also retract. Further, a return spring 31 is provided in a compressed state between the power piston support member 19 and the input shaft 22. This return spring 31 normally urges the input shaft 22 in a non-actuated direction with respect to the power piston support member 19.

Next, the operation of the example electric booster 3 will be explained.
First, an explanation will be given about the electric booster 3 when braking is not being performed.
When the electric booster 3 is in a non-actuated state due to the brake pedal 2 not being depressed, as shown in FIG. 2, the power piston support member 19 and the input receiving member 21 are respectively urged backward (the rightward direction in FIG. 2) by each return spring 30, 31, and are positioned at the non-actuated position at the retraction limit by the key member 26 abutting against the rear housing 8. In this case, with the electric booster 3 in the non-actuated state, the relative displacement of the input receiving member 21 with respect to the power piston support member 19 is specified to be 0. And, in the electronic control unit, the current of the magnetic sensor 28 generated by the magnetic field of the magnet 19 is set to 0 as a reference value. Accordingly, the electronic control unit controls the current control device such that no electric power (current) is supplied to the stator 10 from the power supply.

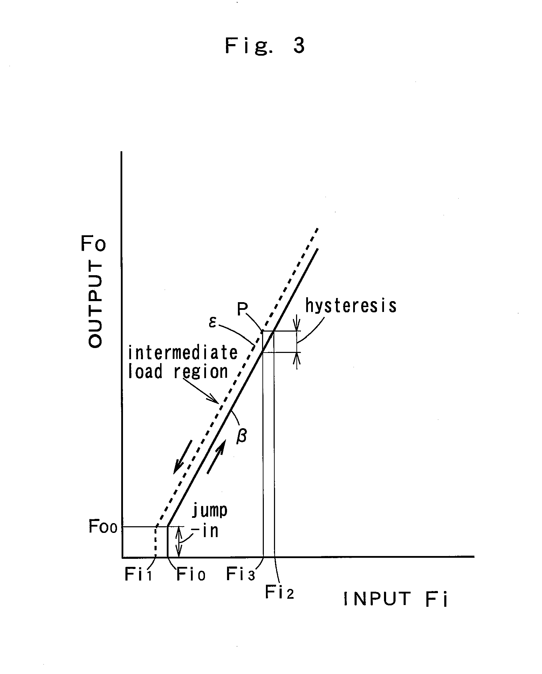

Next, the operation of the electric booster 3 when braking is being performed will be explained.
If the driver depresses the brake pedal 2 in the above described non-actuated state of the electric booster 3, when an input reaches Fi₀ shown in FIG. 3, the return spring 31 deflects, and the input shaft 22 advances. As a result, the input receiving member 21 advances thereby causing relative displacement of the input receiving member 21 with respect to the power piston support member 19. Due to this, the magnetic field of the magnet 29 that acts on the magnetic sensor 28 will fluctuate, causing the magnetic sensor 28 to generate a current that is output to the electronic control unit. Accordingly, the electronic control unit controls the current control device such that current is supplied to the stator 10 from the power supply.

The rotor 11 rotates as a result of the current supplied to the stator 10. The rotation of the rotor 11 causes driving force in the leftward direction in FIG. 2 to be applied to the power piston 14 via the ball screw mechanism 15, whereby the power piston 14 advances in the leftward direction. In the explanation below, rotation of the rotor 11 that causes the power piston 14 to move in the advancing direction will be referred to as positive rotation, and rotation of the rotor 11 that causes the power piston 14 to move in a retraction direction to the right will be referred to as reverse rotation. As a result of the power piston 14 advancing, the output shaft 23 advances along with the power piston support member 19 and the reaction disc 24. Then, the output shaft 23 pushes the primary piston 4a of the tandem master cylinder 4 forward so that the primary piston 4a advances and a secondary piston 4c also advances. As a result, braking liquid pressure is generated in hydraulic chambers 4b, 4d of the tandem master cylinder 4, and the braking liquid pressure is transmitted to each brake cylinder 6.

At the same time, the braking liquid pressure of the tandem master cylinder 4 is transmitted to the output shaft 23 via the primary piston 4a, and along with this the output shaft 23 pushes the reaction disc 24 backwards as a result of reaction force that reflects the braking liquid pressure. Accordingly, the reaction disc 24 bulges to the spacing member 25 side even though it elastically deforms. Further, the gap α reduces due to the spacing member 25 advancing due to the input receiving member 21 advancing. However, until the gap α disappears, the spacing member 25 does not abut against the reaction disc 24. Accordingly, as shown in FIG. 3, the electric booster 3 is configured such that, even if an output increases, the input remains at Fi₀ without change.

Furthermore, when the braking liquid pressure increases along with increase in the output of the electric booster 3, each brake cylinder 6 generates braking force to actuate the brakes, whereby the brakes are applied to each wheel 32.

When the output of the electric booster 3 reaches Fo₀, the gap α disappears due to bulging of the reaction disc 24, and the reaction disc 24 abuts against the spacing member 25 and causes the spacing member 25 to be pushed backward. More specifically, at the input Fi₀, the jump-in characteristic (jumping characteristic) of output Fo₀ is exhibited. Then, pushing force of the spacing member 25 is transmitted as reaction force to the brake pedal 2 via the input receiving member 21 and the input shaft 22. More particularly, a reaction force that corresponds to braking force at the time of the braking operation is transmitted to the brake pedal 2, and thus the driver perceives the braking operation as a result of the braking force that matches the pedal depression force.

As a result of the power piston support member 19 advancing, the relative displacement of the input receiving member 21 and the power piston support member 19 is reduced. Accordingly, the relative displacement of the magnetic sensor 28 and the magnet 29 is also reduced, and thus the current generated by the magnetic sensor 28 becomes smaller. As a result, the electronic control unit controls the current control device to gradually reduce the current supply to the stator 10.

On the other hand, as a result of the power piston support member 19 advancing, the return spring 30 compresses to generate a spring force that increasingly resist the power piston support member 19 as it advances. Then, when the sum of the spring force of the return spring 30 and the reaction force from the output shaft 23 and the sum of the advancing force of the power piston support member 19 (the impelling force resulting from the rotor 11) and the input force are in balance, the advance of the power piston support member 19, namely, the advance of the power piston 14 is stopped. At this time, the relative displacement of the input receiving member 21 and the power piston support member 19 is maintained at a constant level, and the current supplied to the stator 10 is maintained at a constant level. As a result, the rotor 11 of the electric motor 9 continues to apply impelling force that is sufficient to stop the power piston 14 from retracting to the power piston 14. Accordingly, even if the power piston support member 19 and the power piston 14 are urged backwards by the spring force of the return spring 30 and the reaction force from the output shaft 23, they remain in the position at which they have stopped.

Furthermore, as shown in FIG. 3, in a region where the output Fo is greater than a predetermined output Fo₀ of jump-in, the electric booster 3 enters an intermediate load region that generates an output Fo that is the input Fi boosted at a predetermined servo ratio. More specifically, the output Fo of the electric booster 3 increases linearly in accordance with an input-output characteristic line P that has a gradient that reflects a predetermined servo ratio with respect to increase of the input Fi. In this case, the predetermined servo ratio is obtained as the ratio (S₂/S₁) of a pressure-receiving surface area S₂cm² (not shown in the figures) of the output shaft 23 and the reaction disc 24 with respect to a pressure-receiving surface area S₁cm² (not shown in the figures) of the reaction disc 24 and the spacing member 25. Given this, the braking force increases in association with the output Fo of the electric booster 3, which is boosted from the pedal depression force.

Next, the operation of the electric booster 3 when braking is released or braking force is reduced will be explained.
First, an explanation will be given for a situation when braking is released from a state where braking is being performed by the electric booster 3 at a full load state input, or when braking force is being reduced. When the brake pedal 2 is released, the input Fi reduces and thus the input shaft 22, the input receiving member 21 and the spacing member 25 retract relatively to the power piston support member 19 due to the return spring 31. As a result, the relative displacement of the magnet 29 with respect to the magnetic sensor 28 reduces, thus causing the current generated by the magnetic sensor 28 to reduce. Therefore, the electronic control unit reduces the current supplied to the stator 10.

The output of the electric motor 9 reduces along with the reduction in the current applied to the stator 10. At this time, the abutting state of the reaction disc 24 and the spacing member 25 is maintained. Then, the output Fo of the electric booster 3 also decreases as a result of the reduction of the output of the electric motor 9, and the power piston 14 retracts. In other words, the electric booster 3 enters the intermediate load region. Accordingly, as shown by the dotted line in FIG. 3, the output Fo of the electric booster 3 reduces along the gradient of an input-output characteristic line ε (i.e., the same gradient as the input-output characteristic line β) that reflects the same servo ratio described previously with respect to the reduction of the input Fi. Then, when the reduction of the input Fi in the intermediate load state stops, the output Fo of the electric booster 3 becomes the value on the input-output characteristic line ε that corresponds to the value of the input Fi at that time.

Furthermore, when the input Fi reduces as far as the input Fi₁, the spacing member 25 separates away from the reaction disc 24, and the gap α reemerges. As a result, the output Fo₀ of the electric booster 3 reduces with the input Fi₁ unchanged. When both the power piston 14 and the input shaft 22 reach a retraction limit as shown in FIG. 2, the electric booster 3 enters a non-actuated state as shown in FIG. 3. Accordingly, the tandem master cylinder 4 is also placed in a non-actuated state and braking is released.

Moreover, as shown in FIG. 3, in the case that breaking is released from a braking operation at input Fi₂ of the intermediate load state of the electric booster 3, the output Fo of the electric booster 3 remains at a constant level without immediately reducing even if the input Fi reduces. Then, after the time when an input Fi₃ is reached at point P where the input Fi intersects with the input-output characteristic line ε, the output Fo of the electric booster 3, in the same manner as described previously, reduces along the input-output characteristic line ε with respect to the reduction of the input Fi and then falls to 0 after jump-out.

Accordingly, the input-output characteristics of the example electric booster 3 have hysteresis in that, the output Fo with respect to the same input during operation/release of the electric booster 3 is larger than the output Fo during operation. In this manner, the input-output characteristics of the electric booster 3 have hysteresis and thus braking feeling is improved.

With the example electric booster 3, rotation of the electric motor 9 causes the impelling force to be applied to the power piston 14, whereby the power piston 14 is actuated. The output Fo, which is boosted at the predetermined servo ratio from the input Fi resulting from the actuation of the power piston 14, is generated through the output shaft 23. In addition, the reaction force that accompanies the output Fo is transmitted from the output shaft 23 to the reaction disc 24 that is formed from the viscoelastic material. Moreover, the spacing member 25 that is connected with the input receiving member 21 that receives the input Fi is separated by the predetermined gap α from the reaction disc 24 at non-actuated times, and abuts against the reaction disc 24 at actuated times due to application of the predetermined output Fo₀. As a result, it is possible to realize the electric booster 3 that can mechanically exhibit both the jump-in characteristic resulting from the predetermined gap α between the spacing member 25 and the reaction disc 24 and the hysteresis characteristic resulting from the viscoelastic properties of the reaction disc 24, without relying on control software.

In addition, rotation of the rotor 11 of the electric motor 9 causes the impelling force that is directly applied to the power piston 14 via the ball screw mechanism 15. Accordingly, a gear power transmission mechanism like that in the electric booster disclosed in Patent Document 1 does not need to be used, and thus the number of structural components can be reduced. This makes it possible to make the electric booster 3 smaller to this extent. Moreover, as a result of not using the gear power transmission mechanism, when there is reverse rotation of the rotor 11 when the power piston 14 retracts in the full load region of the electric booster 3, torque resistance resulting from the gear power transmission mechanism is reduced, and the reverse rotation of the rotor 11 can take place more smoothly.

In addition, the relative displacement of the input receiving member 21 and the power piston support member 19 that supports the power piston 14 is detected using the relative displacement detection sensor 27, and the electric motor 9 actuates the power piston 14 based on the previously described relative displacement detected by the relative displacement detection sensor 27. As a result, the relative displacement detection sensor 27 can be provided integrally inside the electric booster 3. Thus, it is possible to reduce the number of structural components, and it is also unnecessary to specially provide space for installing the relative displacement detection sensor 27 outside of the electric booster 3. Accordingly, it is possible to make the installation space for the electric booster 3 even smaller, thus meaning that there is greater design freedom in terms of installing the electric booster 3. In addition, the actuation of the electric motor 9 is controlled based on the relative displacement of the power piston support member 19 and the input receiving member 21 that is detected by the relative displacement detection sensor 27. Thus, the actuation of electric booster 3, as compared to the electric booster disclosed in Patent Document 1, can be controlled with higher accuracy.

In this case, as a result of the relative displacement detection sensor 27 having the magnet 29 that is disposed in the input receiving member 21 and the magnetic sensor 28 that is disposed in the power piston support member 19 and that generates an output based on the magnetic field of the magnet 29, the configuration of the relative displacement detection sensor 27 can be made simpler.
Moreover, as a result of providing the reaction disc 23 formed of rubber as the reaction force member, the configuration of the reaction force member can be made even simpler.

Moreover, the example brake device 1 uses the electric booster 3 of the invention and thus the installation space for the brake device 1 can be made even smaller, thus meaning that there is greater design freedom in terms of installing the brake device 1. Moreover, brake control can be performed with higher accuracy.

Note that, the invention is not limited to the example of the embodiment described above. In the example of the embodiment described above, when the power piston 14 retracts due to actuation/release of the electric booster 3 or reduction of the input, supply of current to the stator 10 is also reduced in accordance with the relative displacement of the power piston support member 19 and the input receiving member 21 resulting from the input reduction, but, supply of current to the stator 10 is continued. However, in the electric booster 3 of the invention, when the power piston 14 is retracted, it is possible to either stop current supply to the stator 10 or supply current to the stator such that the rotor 11 performs reverse rotation. Moreover, the spacing member 25 is not an essential element and thus can be omitted. Accordingly, it is possible to provide the predetermined gap α between the input receiving member 21 and the reaction disc 24. Furthermore, various design modifications are possible within the scope of the matters described in the claims of the invention.

### Industrial Applicability

The electric booster according to the invention can be favorably applied to an electric booster that uses electric power to generate an output that is boosted at a predetermined servo ratio from an input.
Moreover, the brake device according to the invention can be favorably applied to a brake device that brakes a vehicle wheel using an electric booster.

## Claims

1. An electric booster comprising:
an input shaft to which an input is applied;
an input receiving member that receives input from the input shaft;
a power piston;
a power piston support member that supports the power piston;
relative displacement detection means for detecting relative displacement of the input receiving member and the power piston support member;
an electric motor that actuates the power piston based on the relative displacement detected by the relative displacement detection means;
an output shaft that generates output as a result of the actuation of the power piston; and
a reaction force member, formed from a viscoelastic material, that receives reaction force from the output shaft, the electric booster being **characterized in that**
the input receiving member is disposed such that the input receiving member is separated away from the reaction force member by a predetermined gap when non-actuated, and can be placed into an abutting state with the reaction force member when actuated when a predetermined input is applied.

2. The electric booster according to claim 1, **characterized in that** the electric motor includes a stator to which current is supplied based on the relative displacement detected by the relative displacement detection means, and a rotor that is rotated by the stator and that applies impelling force to the power piston based on the relative displacement.

3. The electric booster according to claim 1 or 2, **characterized in that** the relative displacement detection means includes a magnetic sensor and a magnet.

4. The electric booster according to claim 3, **characterized in that** the magnetic sensor is disposed in the power piston support member and the magnet is disposed in the input receiving member.

5. The electric booster according to any one of claims 1 to 4, **characterized in that** the reaction force member is a reaction disc that is formed from rubber.

6. A brake device comprising at least:
a brake operating member that performs a brake operation;
an electric booster that generates an output by boosting an input from the brake operating member at a predetermined servo ratio;
a master cylinder, actuated by the output of the electric booster, that generates brake pressure; and
a brake cylinder that is actuated by the brake pressure from the master cylinder, the brake device being **characterized in that**
the electric booster is the electric booster according to any one of claims 1 to 5.
